# EUROPÄISCHE PATENTSCHRIFT

(11) **EP 2 930 066 B1**
(45) Veröffentlichungstag und Bekanntmachung des Hinweises auf die Patenterteilung: **01.03.2017**
(21) Anmeldenummer: 15162824.5
(22) Anmeldetag: 08.04.2015
(51) Int. Cl.: B60R 13/02, B29C 37/00, B44F 1/06, B44F 7/00

(54) **DEKORTEIL FÜR EINEN FAHRZEUGINNENRAUM, VERFAHREN ZUM HERSTELLEN DES DEKORTEILS UND VORRICHTUNG ZUM HERSTELLEN DES DEKORTEILS UND ZUR DURCHFÜHRUNG DES VERFAHRENS**
DECORATIVE PART FOR A VEHICLE INTERIOR, METHOD FOR PRODUCING THE DECORATIVE PART AND DEVICE FOR PRODUCING THE DECORATIVE PART AND CARRYING OUT THE METHOD
ÉLÉMENT DE DÉCOR POUR UN HABITACLE DE VÉHICULE, PROCÉDÉ DE FABRICATION DE L'ÉLÉMENT DE DÉCOR ET DISPOSITIF DE FABRICATION DE L'ÉLÉMENT DE DÉCOR ET D'EXÉCUTION DU PROCÉDÉ

(30) Priorität: 09.04.2014 DE 102014105065
(43) Veröffentlichungstag der Anmeldung: 14.10.2015
(73) Patentinhaber: Novem Car Interior Design GmbH, 95519 Vorbach (DE)
(72) Erfinder: Egerer, Gerhard, 92724 Trabitz (DE); Helldörfer, Markus, 95444 Bayreuth (DE)
(74) Vertreter: Schlögl, Markus

(56) Entgegenhaltungen:
- WO-A1-03/042727
- DE-A1-102010 051 291
- US-A- 4 748 062
- US-A1- 2003 235 679
- US-A1- 2014 009 836

## Beschreibung

Die Erfindung betrifft ein Verfahren zum Herstellen eines Dekorteils für einen Fahrzeuginnenraum und eine Vorrichtung zum Herstellen des Dekorteils sowie zur Durchführung des Verfahrens.

Im Fahrzeuginnenraum werden zahlreiche Dekorteile eingebaut, beispielsweise Türverkleidungen, Konsolen- und Instrumentenverblendungen. Zu den Dekorteilen zählen auch Bedientasten bzw. die Abdeckungen von Bedientasten.

Die Erfindung beschäftigt sich mit Dekorteilen, die einen zumindest teilweise transparenten und/oder transluzenten Lackaufbau an der Vorderseite der Dekorschicht aufweisen. Es ist bekannt, Dekorteile mit einfachen bzw. einlagigen Lackschichten zum Schutz gegen Beschädigungen und Verschmutzung bzw. zur Verbesserung der Optik zu versehen. Diese Lackschichten werden dabei vorwiegend glatt auf die Dekorteile aufgetragen bzw. sie bilden am Dekorteil eine glatte Oberfläche. Das heißt, dass die Form des Dekorteils zwar nachvollzogen wird, dabei jedoch die Oberfläche der Lackschicht nicht in sich strukturiert, sondern plan bzw. eben ist. Ebenso wirkt die Oberfläche der Lackschicht für einen Betrachter im Wesentlichen plan bzw. glatt.

Zum Stand der Technik wird verwiesen auf die Druckschrift US 2014/ 0009836 A1

Der vorliegenden Erfindung liegt die Aufgabe zugrunde, ein Verfahren
zum Herstellen eines Dekorteils und eine Vorrichtung zum Herstellen des Dekorteils bzw. zur Durchführung des Verfahrens angegeben werden, wobei das Dekorteil im Vergleich zu bekannten Dekorteilen einen neuartigen Lackaufbau zur Erreichung oder Verstärkung einer dreidimensionalen optischen Tiefenwirkung aufweist.

Diese Aufgabe wird hinsichtlich des Verfahrens zum Herstellen des Dekorteils durch die Merkmale des Anspruchs 1 und hinsichtlich der Vorrichtung zum Herstellen des Dekorteils bzw. zur Durchführung des Verfahrens durch die Merkmale des Anspruchs 5 gelöst. Vorteilhafte Ausgestaltungen und Weiterbildungen sind in den jeweils abhängigen Ansprüchen angegeben.

Das erfindungsgemäße Verfahren zum Herstellen eines Dekorteils für einen Fahrzeuginnenraum umfassend einen Träger mit einer durch den Träger gebildeten oder auf dem Träger angeordneten Dekorschicht, die eine als Sichtseite des Dekorteils ausgebildete Vorderseite aufweist, und einen zumindest teilweise transparenten und/oder transluzenten Lackaufbau an der Vorderseite der Dekorschicht, wobei der Lackaufbau wenigstens zwei an der Vorderseite der Dekorschicht ausgebildete, insbesondere angegossene, und übereinander angeordnete Lackschichten umfasst, wobei eine der Dekorschicht abgewandte Vorderseite der äußersten Lackschicht eine im Wesentlichen glatte Oberfläche aufweist, wobei jeweils zwei übereinanderliegende Lackschichten zwischen sich eine Grenzfläche definieren, und wobei die wenigstens eine Grenzfläche in Relation zur im Wesentlichen glatten Oberfläche der Vorderseite der äußersten Lackschicht eine zumindest abschnittsweise dreidimensionale Struktur, insbesondere zur Erreichung oder Verstärkung einer dreidimensionalen optischen Tiefenwirkung, aufweist, kennzeichnet sich durch folgende Schritte:
- Bereitstellen eines Rohlings umfassend den Träger mit der durch den Träger gebildeten oder auf dem Träger angeordneten Dekorschicht in einer zur Aufnahme des Rohlings vorgesehenen Unterform eines Lackierwerkzeugs,
- Durchführen eines ersten Lackierschrittes, wobei die Unterform mit einer ersten Oberform zusammengeführt wird und anschließend im Lackierwerkzeug eine erste Lackschicht des Lackaufbaus mit einer durch die Formfläche der ersten Oberform vorgegebene Oberflächenstruktur aufgebracht wird,
- Durchführen eines zweiten Lackierschrittes, wobei die Unterform mit einer zweiten Oberform zusammengeführt wird und anschließend eine zweite Lackschicht des Lackaufbaus mit einer durch die Formfläche der zweiten Oberform vorgegebenen Oberflächenstruktur aufgebracht wird.

Die Vorteile der Erfindung liegen insbesondere darin, dass durch die Ausgestaltung des Lackaufbaus eine dreidimensionale optische Tiefenwirkung erreicht oder verstärkt wird. Auf diese Weise lassen sich vielfältige optische 3D-Effekte und/oder holographische Effekte an den Dekorteilen realisieren.

Die wenigstens eine Grenzfläche kann im Wesentlichen über ihre gesamte Fläche eine dreidimensionale Struktur, insbesondere eine im Querschnitt wellenartige Struktur, ausbilden. Es ist aber auch möglich, dass die wenigstens eine Grenzfläche nur abschnittsweise oder partiell eine dreidimensionale Struktur ausbildet, insbesondere durch in die jeweils inneren Lackschichten geprägte Strukturen und/oder auf die jeweils inneren Lackschichten aufgesetzte Elemente, insbesondere Symbole, wobei die geprägten Strukturen und/oder aufgesetzten Elemente selbst eine glatte oder auch eine strukturierte Oberfläche aufweisen können.

Gemäß einer Weiterbildung des Dekorteils sind die Lackschichten aus Polyurethan und/oder Acrylat und/oder Polyester und/oder Polyurethan und/oder Epoxid umfassenden Lacken gebildet, insbesondere gegossen.

Insbesondere Gießverfahren mit Polyurethanlack sind vorteilhaft gegenüber herkömmlichen Spritzgießverfahren mit Thermoplasten, da das Aushärten des Polyurethanlacks präzise gesteuert werden kann, und damit einhergehend eine gleichmäßige Verteilung des Lacks auch über große Flächen möglich ist. Polyurethane weisen des Weiteren gute Haftungseigenschaften und eine hohe Beständigkeit gegen Lösemittel, Chemikalien und Witterungseinflüsse auf.

Eine Weiterbildung des Dekorteils sieht vor, dass die Lacke verschiedener Lackschichten sich unterscheiden, insbesondere hinsichtlich ihres Brechungsindexes und/oder ihrer Transparenz und/oder ihrer Transluzenz und/oder ihrer Einfärbung und/oder ihrer Additive und/oder zugegebener Metallpartikel. Bei den Additiven kann es sich um Talkum, Glasfasern, Glaskugeln, nichtmetallische Partikel, wie z.B. Nanopartikel oder Effektpigmente handeln.

Die Lackschichten können an den jeweiligen Grenzflächen direkt aneinander grenzen. Es ist aber auch möglich, an wenigstens einer Grenzfläche eine Primer-Zwischenschicht vorzusehen, beispielsweise als Haftvermittler zwischen den Lackschichten.

Gemäß einer Ausführungsvariante ist wenigstens eine der Lackschichten als Lichtleiter ausgebildet, wobei der Lichtleiter Licht im Wesentlichen parallel zur Vorderseite der äußersten Lackschicht verteilt. Hierzu kann beispielsweise vorgesehen sein, eine Lichtquelle seitlich an der oder den Lackschichten anzuordnen. Durch Reflexion, Brechung und/oder Streuung des Lichts an der oder den Grenzflächen können sich vielfältige optische Effekte ergeben.

Weiterhin kann vorgesehen sein, dass der Lackaufbau wenigstens drei an die Vorderseite der Dekorschicht ausgebildete, insbesondere angegossene, und übereinander angeordnete Lackschichten und damit wenigstens zwei Grenzflächen umfasst, wobei jede der wenigstens zwei Grenzflächen in Relation zur im Wesentlichen planen Oberfläche der Vorderseite der äußersten Lackschicht eine dreidimensionale Struktur zur Erreichung oder Verstärkung einer dreidimensionalen optischen Tiefenwirkung aufweist, wobei sich die dreidimensionalen Strukturen der wenigstens zwei Grenzflächen unterscheiden.

Auch kann vorgesehen sein, dass der Lackaufbau wenigstens drei an die Vorderseite der Dekorschicht ausgebildete, insbesondere angegossene, und übereinander angeordnete Lackschichten und damit wenigstens zwei Grenzflächen umfasst, wobei jede der wenigstens zwei Grenzflächen in Relation zur im Wesentlichen glatten Oberfläche der Vorderseite der äußersten Lackschicht eine dreidimensionale Struktur zur Erreichung oder Verstärkung einer dreidimensionalen optischen Tiefenwirkung aufweist, wobei die dreidimensionalen Strukturen der wenigstens zwei Grenzflächen im Wesentlichen einander entsprechen, jedoch parallel zur Vorderseite der äußersten Lackschicht zueinander versetzt ausgebildet sind.

Gemäß einer Weiterbildung des Dekorteils weist die Vorderseite der Dekorschicht eine in Relation zur im Wesentlichen glatten Oberfläche der Vorderseite der äußersten Lackschicht eine dreidimensionale Struktur zur Erzielung oder Verstärkung einer dreidimensionalen Tiefenwirkung auf.

Die Vorderseite der Dekorschicht kann im Wesentlichen über ihre gesamte Fläche eine dreidimensionale Struktur, insbesondere eine im Querschnitt wellenartige Struktur, ausbilden. Sie kann aber auch nur abschnittsweise oder partiell eine dreidimensionale Struktur, insbesondere durch in die Vorderseite der Dekorschicht geprägte Strukturen und/oder auf die Vorderseite der Dekorschicht aufgesetzte Elemente, insbesondere Symbole, ausbilden, wobei die geprägten Strukturen und/oder aufgesetzten Elemente eine glatte oder eine strukturierte Oberfläche aufweisen können.

Eine vorteilhafte Weiterbildung sieht vor, dass die dreidimensionale Struktur der Vorderseite der Dekorschicht sich von der dreidimensionalen Struktur der Grenzfläche oder wenigstens einer der Grenzflächen unterscheidet.

Alternativ entspricht die dreidimensionale Struktur der Vorderseite der Dekorschicht im Wesentlichen der dreidimensionalen Struktur der Grenzfläche oder wenigstens einer der Grenzflächen, wobei diese Strukturen parallel zur Vorderseite der äußersten Lackschicht zueinander versetzt angeordnet sind.

Der Träger kann beispielsweise aus Metall und/oder Kunststoff und/oder Hartschaum bestehen oder Metall und/oder Kunststoff und/oder Hartschaum umfassen. Beispielsweise kann er ein Thermoplast oder ein Elastomer oder ein Duroplast sein oder dieses umfassen. Zweckmäßig ist, wenn der Träger ein oder mehrere Befestigungselemente für die Anbringung des Dekorteils, insbesondere in einem Fahrzeuginnenraum, aufweist oder ausbildet.

Des Weiteren kann vorgesehen sein, dass der Träger eine Dicke von maximal 0,7 mm, insbesondere von maximal 0,5 mm, vorzugsweise von 0,3 mm, aufweist.

Die Dekorschicht kann direkt durch den Träger gebildet sein, beispielsweise durch das Metall und/oder den Kunststoff des Trägers. Es ist aber ebenso möglich, dass die Dekorschicht eine getrennte Schicht ist. Gemäß einer Ausführungsvariante ist die Dekorschicht aus einem Verbundwerkstoff, insbesondere einem Schichtverbundwerkstoff, gebildet ist, der eine Dekorlage umfasst. Die Dekorlage kann hierbei beispielsweise eine Holzfurnierlage, eine Metalllage, eine Folie, vorzugsweise eine Kunststoff- und/oder Metallfolie, und/oder eine Farbschicht und/oder eine Textillage, beispielsweise ein Stoff, sein. Es ist aber auch möglich, dass die Dekorschicht eine Holzfurnierlage, eine Metalllage, eine Folie, vorzugsweise eine Kunststoff- und/oder Metallfolie, und/oder eine Farbschicht und/oder eine Textillage, beispielsweise ein Stoff, ist. Beim Vorsehen eines Holzfurniers ist kann das Holzfurnier beispielsweise an seiner Rückseite mit einer Vlieslage zur Flexibilisierung des Holzfurniers versehen sein. Bei dem Holzfurnier kann es sich sowohl um ein Echtholzfurnier als auch um ein Kunstholzfurnier handeln.

Die Dekorschicht kann an den Träger angeklebt und/oder angespritzt und/oder angepresst und/oder angegossen sein.

Zweckmäßig ist auch, wenn der Träger ein oder mehrere Befestigungselemente für die Anbringung des Dekorteils, insbesondere in einem Fahrzeuginnenraum, aufweist oder ausbildet. Beispielsweise können diese Befestigungselemente bei der Herstellung des Dekorteils als Einlegeteile mit in ein Formpresswerkzeug eingelegt und dort an den Träger angepresst oder eingepresst werden. Es ist aber auch möglich, diese Befestigungselemente an das bereits hergestellte Dekorteil umfassend Dekorschicht und Träger anzubringen, beispielsweise durch Ankleben oder Anspritzen oder Angießen. Bei dem Befestigungselement kann es sich beispielsweise um einen Teil eines Klettverschlusses oder um eine mechanische Halterung, wie zum Beispiel Haken, Klemmteile, Zapfen, Bolzen, Stifte oder dergleichen handeln.

Es kann vorgesehen sein, dass das Dekorteil eine Dicke von maximal 1,5 mm, insbesondere von maximal 1,0 mm, vorzugsweise von maximal 0,7 mm, aufweist.

Die Lackierschritte können Gießen und/oder Spritzgießen und/oder Walzen und/oder Drucken, insbesondere Siebdrucken, umfassen.

Nach dem Durchführen des ersten Lackierschrittes kann ein Prägeschritt durchgeführt werden, wobei die Unterform mit der ersten Oberform zusammengeführt wird und während des Zusammenführens eine Prägung auf der ersten Lackschicht mit einer durch die Formfläche der ersten Oberform vorgegebenen Oberflächenstruktur übertragen wird.

Gemäß einer Weiterbildung schließt sich an den zweiten Lackierschritt wenigstens ein weiterer Lackierschritt mit wenigstens einer weiteren Oberform an, bei dem wenigstens eine weitere Lackschicht des Lackaufbaus mit einer durch die Formfläche der weiteren Oberform vorgegebene Oberflächenstruktur aufgebracht wird. Der weitere Lackierschritt kann ebenfalls Gießen und/oder Spritzgießen und/oder Walzen und/oder Drucken, insbesondere Siebdrucken, umfassen.

An das vorstehend beschriebene Verfahren können sich zur Fertigstellung der Dekorteile gegebenenfalls weitere Verfahrensschritte anschließen, beispielsweise wird das Lackierwerkzeug nach dem letzten Lackierschritt geöffnet und das Dekorteil anschließend abgeführt.

Vorzugsweise härtet der Lackaufbau vor dem Öffnen des Lackierwerkzeugs und/oder vor dem Abführen des Dekorteils aus.

Die erfindungsgemäße Vorrichtung zum Herstellen eines Dekorteils für einen Fahrzeuginnenraum umfassend einen Träger mit einer durch den Träger gebildeten oder auf dem Träger angeordneten Dekorschicht, die eine als Sichtseite des Dekorteils ausgebildete Vorderseite aufweist, und einen zumindest teilweise transparenten und/oder transluzenten Lackaufbau an der Vorderseite der Dekorschicht, wobei der Lackaufbau wenigstens zwei an der Vorderseite der Dekorschicht ausgebildete, insbesondere angegossene, und übereinander angeordnete Lackschichten umfasst, wobei eine der Dekorschicht abgewandte Vorderseite der äußersten Lackschicht eine im Wesentlichen glatte Oberfläche aufweist, wobei jeweils zwei übereinanderliegende Lackschichten zwischen sich eine Grenzfläche definieren, und wobei die wenigstens eine Grenzfläche in Relation zur im Wesentlichen glatten Oberfläche der Vorderseite der äußersten Lackschicht eine zumindest abschnittsweise dreidimensionale Struktur, insbesondere zur Erreichung oder Verstärkung einer dreidimensionalen optischen Tiefenwirkung, aufweist, und zur Durchführung des erfindungsgemäßen Verfahrens umfasst ein Lackierwerkzeug, insbesondere ein Gieß- und/oder Spritzgieß- und/oder Walz- und/oder Druckwerkzeug, mit einer Unterform und wenigstens zwei Oberformen, wobei die Unterform zur Aufnahme des Rohlings vorgesehen ist, und die Formflächen der Oberformen die Oberflächenstruktur der anzugießenden Lackschichten vorgeben.

Gemäß einer Weiterbildung ist die Unterform drehbar gelagert und damit durch entsprechende Drehbewegung den wenigstens zwei Oberformen zuwendbar zur Durchführung der verschiedenen Aufbringungsschritte. Alternativ ist die Unterform stationär und die Oberformen sind der Unterform, insbesondere durch entsprechende Drehbewegungen und/oder axiale Bewegungen zuführbar.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen
- FIG 1: in einer schematischen Querschnittsdarstellung ein erstes Ausführungsbeispiel eines mit dem erfindungsgemäßen Verfahren hergestellten Dekorteils;
- FIG 2: in einer schematischen Querschnittsdarstellung ein zweites Ausführungsbeispiel eines mit dem erfindungsgemäßen Verfahren hergestellten Dekorteils;
- FIG 3: in einer schematischen Querschnittsdarstellung ein drittes Ausführungsbeispiel eines mit dem erfindungsgemäßen Verfahren hergestellten Dekorteils.

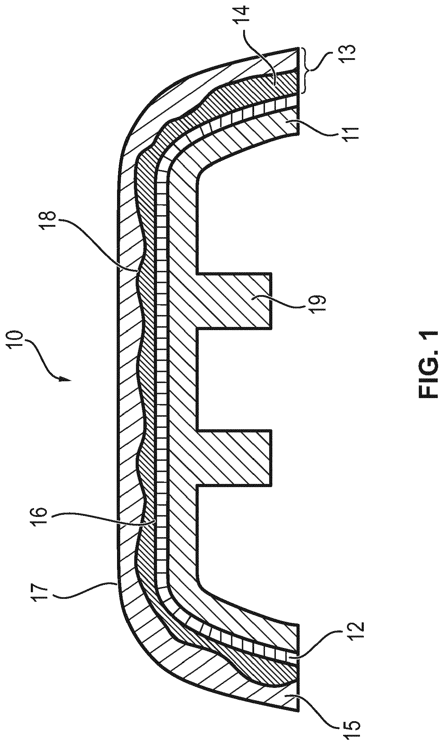

Einander entsprechende Teile und Komponenten in FIG 1 bis FIG 3, auch über die verschiedenen Ausführungsbeispiele hinweg, sind mit den gleichen Bezugszeichen bezeichnet.

Angemerkt sei, dass in FIG 1 bis FIG 3 die Größenverhältnisse des Trägers, der Dekorschicht sowie des Lackaufbaus zueinander mit Bezug auf die jeweilige Dicke nicht den realen Verhältnissen entsprechen und lediglich zur Verdeutlichung der Erfindung derart dargestellt werden. Die Lackschicht ist in der Realität üblicherweise im Verhältnis zum Träger und zur Dekorschicht deutlich dünner.

FIG 1 zeigt in einer schematischen Querschnittsdarstellung ein erstes Ausführungsbeispiel eines mit dem erfindungsgemäßen Verfahren hergestellten Dekorteils 10 für einen Fahrzeuginnenraum, umfassend einen Träger 11 mit einer auf dem Träger angeordneten Dekorschicht 12, die eine als Sichtseite des Dekorteils ausgebildete Vorderseite 16 aufweist, und einen transparente Lackaufbau 13 an der Vorderseite 16 der Dekorschicht 12.

Der Lackaufbau 13 umfasst zwei an der Vorderseite 16 der Dekorschicht 12 ausgebildete, insbesondere angegossene, und übereinander angeordnete Lackschichten 14, 15, wobei die der Dekorschicht 12 abgewandte Vorderseite 17 der äußersten Lackschicht 15 eine glatte Oberfläche aufweist, wobei die zwei übereinanderliegenden Lackschichten 14, 15 zwischen sich eine Grenzfläche 18 definieren, und die Grenzfläche 18 in Relation zur glatten Oberfläche der Vorderseite 17 der äußersten Lackschicht 15 eine dreidimensionale Struktur zur Erreichung einer dreidimensionalen optischen Tiefenwirkung aufweist.

Die Lackschichten 14, 15 sind beispielsweise aus Polyurethanlack gegossen.

Der Lack der Lackschicht 14 kann einen anderen Brechungsindex aufweisen als der Lack der äußersten Lackschicht 15, wodurch die dreidimensionale optische Tiefenwirkung verstärkt wird.

An dem Träger 11 sind schematisch dargestellte Befestigungselemente 19 zur Anbringung des Dekorteils 12 vorgesehen. Hierbei kann es sich um mechanische Halterungen, die bei der Trägerausbildung als Einlegeteile vorgesehen sind, handeln. Es kann sich aber auch um Anspritz- oder Angießteile handeln, oder schlicht um ein Klebeband oder um einen Teil eines Klettverschlusses, der an dem Träger 11 befestigt ist. Das Gegenstück kann dann beispielsweise im Innenraum des Fahrzeugs, an dem das Dekorteil 12 anzubringen ist, vorgesehen sein.

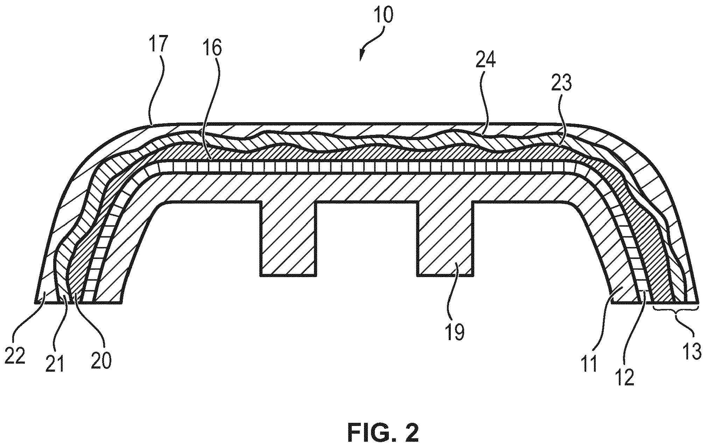

FIG 2 zeigt in einer schematischen Querschnittsdarstellung ein zweites Ausführungsbeispiel eines mit dem erfindungsgemäßen Verfahren hergestellten Dekorteils 10 für einen Fahrzeuginnenraum, umfassend einen Träger 11 mit einer auf dem Träger angeordneten Dekorschicht 12, die eine als Sichtseite des Dekorteils ausgebildete Vorderseite 16 aufweist, und einen transparente Lackaufbau 13 an der Vorderseite 16 der Dekorschicht 12. An dem Träger 11 sind schematisch dargestellte Befestigungselemente 19 zur Anbringung des Dekorteils 12 vorgesehen.

Der Lackaufbau 13 umfasst drei an die Vorderseite 16 der Dekorschicht 12 ausgebildete, insbesondere angegossene, und übereinander angeordnete Lackschichten 20, 21, 22 und damit zwei Grenzflächen 23, 24, wobei beide Grenzflächen 23, 24 in Relation zur im Wesentlichen glatten Oberfläche der Vorderseite 17 der äußersten Lackschicht 22 eine dreidimensionale Struktur zur Erreichung einer dreidimensionalen optischen Tiefenwirkung aufweisen. Die dreidimensionalen Strukturen der zwei Grenzflächen 23, 24 unterscheiden sich voneinander.

Die Lackschichten 20, 21, 22 können aus Polyurethanlack gegossen sein.

Die Lacke der Lackschichten 20, 21, 22 können einen jeweils unterschiedlichen Brechungsindex aufweisen, wodurch die dreidimensionale optische Tiefenwirkung verstärkt wird.

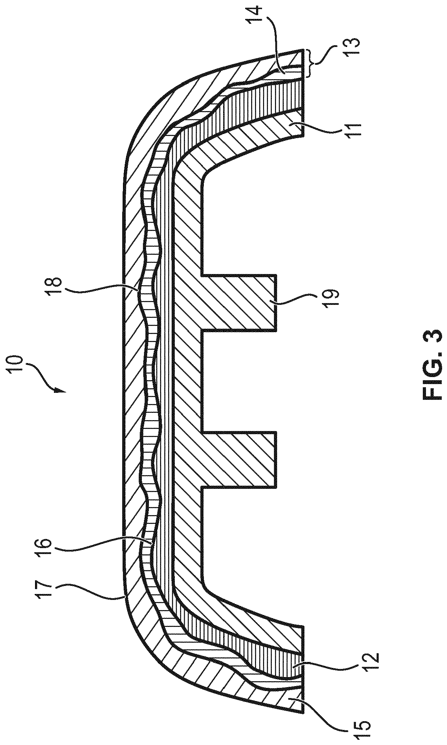

FIG 3 zeigt in einer schematischen Querschnittsdarstellung ein drittes Ausführungsbeispiel eines mit dem erfindungsgemäßen Verfahren hergestellten Dekorteils 10 für einen Fahrzeuginnenraum, umfassend einen Träger 11 mit einer auf dem Träger angeordneten Dekorschicht 12, die eine als Sichtseite des Dekorteils ausgebildete Vorderseite 16 aufweist, und einen aus zwei Lackschichten 14, 15 gebildeten transparenten Lackaufbau 13 an der Vorderseite 16 der Dekorschicht 12. An dem Träger 11 sind schematisch dargestellte Befestigungselemente 19 zur Anbringung des Dekorteils 12 vorgesehen.

Die Vorderseite 16 der Dekorschicht 12 weist eine in Relation zur im Wesentlichen glatten Oberfläche der Vorderseite 17 der äußersten Lackschicht 15 dreidimensionale Struktur zur Erreichung einer dreidimensionalen Tiefenwirkung auf. Die dreidimensionale Struktur der Vorderseite 16 der Dekorschicht 12 unterscheidet sich von der dreidimensionalen Struktur der Grenzfläche 18.

### Bezugszeichenliste

- 10: Dekorteil
- 11: Träger
- 12: Dekorschicht
- 13: Lackaufbau
- 14: Lackschicht
- 15: Lackschicht
- 16: Vorderseite
- 17: Vorderseite
- 18: Grenzfläche
- 19: Befestigungselemente
- 20: Lackschicht
- 21: Lackschicht
- 22: Lackschicht
- 23: Grenzfläche
- 24: Grenzfläche

## Patentansprüche

1. Verfahren zum Herstellen eines Dekorteils (10) für einen Fahrzeuginnenraum, umfassend
einen Träger (11) mit einer durch den Träger (11) gebildeten oder auf dem Träger angeordneten Dekorschicht (12), die eine als Sichtseite des Dekorteils ausgebildete Vorderseite (16) aufweist, und einen zumindest teilweise transparenten und/oder transluzenten Lackaufbau (13) an der Vorderseite (16) der Dekorschicht (12), wobei der Lackaufbau (13) wenigstens zwei an der Vorderseite (16) der Dekorschicht (12) ausgebildete, insbesondere angegossene, und übereinander angeordnete Lackschichten (14, 15; 20, 21, 22) umfasst, wobei eine der Dekorschicht (12) abgewandte Vorderseite (17) der äußersten Lackschicht (15; 22) eine im Wesentlichen glatte Oberfläche aufweist, wobei jeweils zwei übereinanderliegende Lackschichten (14, 15; 20, 21, 22) zwischen sich eine Grenzfläche (18; 23, 24) definieren, und wobei die wenigstens eine Grenzfläche (18; 23, 24) in Relation zur im Wesentlichen glatten Oberfläche der Vorderseite (17) der äußersten Lackschicht (15; 22) eine zumindest abschnittsweise dreidimensionale Struktur aufweist,
**gekennzeichnet durch** folgende Schritte:
- Bereitstellen eines Rohlings umfassend den Träger (11) mit der durch den Träger (11) gebildeten oder auf dem Träger angeordneten Dekorschicht (12) in einer zur Aufnahme des Rohlings vorgesehenen Unterform eines Lackierwerkzeugs,
- Durchführen eines ersten Lackierschrittes, wobei die Unterform mit einer ersten Oberform zusammengeführt wird und anschließend im Lackierwerkzeug eine erste Lackschicht (14; 20) des Lackaufbaus (13) mit einer **durch** die Formfläche der ersten Oberform vorgegebene Oberflächenstruktur aufgebracht wird,
- Durchführen eines zweiten Lackierschrittes, wobei die Unterform mit einer zweiten Oberform zusammengeführt wird und anschließend eine zweite Lackschicht (15; 21) des Lackaufbaus (13) mit einer **durch** die Formfläche der zweiten Oberform vorgegebene Oberflächenstruktur aufgebracht wird.

2. Verfahren nach Anspruch 1,
**dadurch gekennzeichnet, dass**
der erste Lackierschritt und/oder der zweite Lackierschritt Gießen und/oder Spritzgießen und/oder Walzen und/oder Drucken, insbesondere Siebdrucken, umfassen.

3. Verfahren nach Anspruch 1 oder 2,
**dadurch gekennzeichnet, dass**
nach dem Durchführen des ersten Lackierschrittes ein Prägeschritt durchgeführt wird, wobei die Unterform mit der ersten Oberform zusammengeführt wird und während des Zusammenführens eine Prägung auf der ersten Lackschicht mit einer durch die Formfläche der ersten Oberform vorgegebenen Oberflächenstruktur übertragen wird.

4. Verfahren nach einem der Ansprüche 1 bis 3,
**dadurch gekennzeichnet, dass**
sich an den zweiten Lackierschritt wenigstens ein weiterer Lackierschritt mit wenigstens einer weiteren Oberform anschließt, bei dem wenigstens eine weitere Lackschicht (22) des Lackaufbaus (13) mit einer durch die Formfläche der weiteren Oberform vorgegebene Oberflächenstruktur angegossen wird.

5. Vorrichtung zum Herstellen eines Dekorteils für einen Fahrzeuginnenraum, umfassend
einen Träger (11) mit einer durch den Träger (11) gebildeten oder auf dem Träger angeordneten Dekorschicht (12), die eine als Sichtseite des Dekorteils ausgebildete Vorderseite (16) aufweist, und einen zumindest teilweise transparenten und/oder transluzenten Lackaufbau (13) an der Vorderseite (16) der Dekorschicht (12), wobei der Lackaufbau (13) wenigstens zwei an der Vorderseite (16) der Dekorschicht (12) ausgebildete, insbesondere angegossene, und übereinander angeordnete Lackschichten (14, 15; 20, 21, 22) umfasst, wobei eine der Dekorschicht (12) abgewandte Vorderseite (17) der äußersten Lackschicht (15; 22) eine im Wesentlichen glatte Oberfläche aufweist, wobei jeweils zwei übereinanderliegende Lackschichten (14, 15; 20, 21, 22) zwischen sich eine Grenzfläche (18; 23, 24) definieren, und wobei die wenigstens eine Grenzfläche (18; 23, 24) in Relation zur im Wesentlichen glatten Oberfläche der Vorderseite (17) der äußersten Lackschicht (15; 22) eine zumindest abschnittsweise dreidimensionale Struktur aufweist, und zur Durchführung eines Verfahrens nach einem der Ansprüche 1 bis 4, umfassend ein Lackierwerkzeug, insbesondere ein Gieß- und/oder Spritzgieß- und/oder Walz- und/oder Druckwerkzeug, mit einer Unterform und wenigstens zwei Oberformen,
wobei die Unterform zur Aufnahme des Rohlings vorgesehen ist, und die Formflächen der Oberformen die Oberflächenstruktur der anzugießenden Lackschichten vorgeben.

6. Vorrichtung nach Anspruch 5,
**dadurch gekennzeichnet, dass**
die Unterform drehbar gelagert ist und damit durch entsprechende Drehbewegung den wenigstens zwei Oberformen zuwendbar ist zur Durchführung der verschiedenen Aufbringungsschritte.

## Claims

1. Method for producing a decorative part (10) for a vehicle interior, comprising
a carrier (11) with a decorative layer (12), which is formed by the carrier (11) or arranged on the carrier and has a front side (16) formed as a visible side of the decorative part, and comprising an at least partially transparent and/or translucent coating system (13) on the front side (16) of the decorative layer (12), wherein the coating system (13) comprises at least two coating layers (14, 15; 20, 21, 22), which are formed, in particular moulded, on the front side (16) of the decorative layer (12) and are arranged one over the other, wherein a front side (17) of the outermost coating layer (15; 22) that is facing away from the decorative layer (12) has a substantially smooth surface, wherein two coating layers (14, 15; 20, 21, 22) lying one over the other respectively define a boundary surface (18; 23, 24) between them, and wherein the at least one boundary surface (18; 23, 24) has at least in certain portions a three-dimensional structure in relation to the substantially smooth surface of the front side (17) of the outermost coating layer (15; 22),
**characterized by** the following steps:
- providing a blank comprising the carrier (11) with the decorative layer (12) formed by the carrier (11) or arranged on the carrier in a lower mould of a coating tool that is intended for receiving the blank,
- carrying out a first coating step, wherein the lower mould is brought together with a first upper mould and subsequently a first coating layer (14; 20) of the coating system (13) with a surface structure predetermined by the mould surface of the first upper mould is applied in the coating tool,
- carrying out a second coating step, wherein the lower mould is brought together with a second upper mould and subsequently a second coating layer (15; 21) of the coating system (13) with a surface structure predetermined by the mould surface of the second upper mould is applied.

2. Method according to Claim 1,
**characterized in that**
the first coating step and/or the second coating step comprise moulding and/or injection moulding and/or rolling and/or printing, in particular screen printing.

3. Method according to Claim 1 or 2,
**characterized in that**
after carrying out the first coating step, an embossing step is carried out, wherein the lower mould is brought together with the first upper mould and, while they are being brought together, an embossing is transferred onto the first coating layer with a surface structure predetermined by the mould surface of the first upper mould.

4. Method according to one of Claims 1 to 3,
**characterized in that**
the second coating step is followed by at least one further coating step with at least one further upper mould, in which at least one further coating layer (22) of the coating system (13) with a surface structure predetermined by the mould surface of the further upper mould is moulded on.

5. Device for producing a decorative part for a vehicle interior, comprising
a carrier (11) with a decorative layer (12), which is formed by the carrier (11) or arranged on the carrier and has a front side (16) formed as a visible side of the decorative part, and comprising an at least partially transparent and/or translucent coating system (13) on the front side (16) of the decorative layer (12), wherein the coating system (13) comprises at least two coating layers (14, 15; 20, 21, 22), which are formed, in particular moulded, on the front side (16) of the decorative layer (12) and are arranged one over the other, wherein a front side (17) of the outermost coating layer (15; 22) that is facing away from the decorative layer (12) has a substantially smooth surface, wherein two coating layers (14, 15; 20, 21, 22) lying one over the other respectively define a boundary surface (18; 23, 24) between them, and wherein the at least one boundary surface (18; 23, 24) has at least in certain portions a three-dimensional structure in relation to the substantially smooth surface of the front side (17) of the outermost coating layer (15; 22), and, for carrying out a method according to one of Claims 1 to 4, comprising a coating tool, in particular a moulding and/or injection-moulding and/or rolling and/or printing tool, with a lower mould and at least two upper moulds,
wherein the lower mould is intended for receiving the blank, and the mould surfaces of the upper moulds predetermine the surface structure of the coating layers to be moulded on.

6. Device according to Claim 5,
**characterized in that**
the lower mould is rotatably mounted and consequently, by appropriate rotational movement, can be turned towards the at least two upper moulds for carrying out the various application steps.

## Revendications

1. Procédé de fabrication d'un élément décoratif (10) pour un habitacle de véhicule, comprenant
un support (11) ayant une couche décorative (12) formée à travers le support (11) ou agencée sur le support, qui présente une face avant (16) formée en tant que face visible de l'élément décoratif, et un système de peinture au moins partiellement transparente et/ou translucide (13) sur la face avant (16) de la couche décorative (12), dans lequel le système de peinture (13) présente au moins deux couches de peinture 14, 15 ; 20, 21, 22) superposées, en particulier coulées, formées sur la face avant (16) de la couche décorative (12), dans lequel une face avant (17) opposée à la couche décorative (12) de la couche de peinture la plus extérieure (15 ; 22) présente une surface supérieure sensiblement lisse, dans lequel respectivement deux couches de peinture (14, 15 ; 20, 21, 22) superposées définissent entre elles une interface (18 ; 23, 24), et dans lequel la au moins une interface (18 ; 23, 24), par rapport à la surface supérieure sensiblement lisse de la face avant (17) de la couche de peinture la plus extérieure (15 ; 22), présente une structure au moins partiellement tridimensionnelle,
**caractérisé par** les étapes suivantes consistant à:
- fournir une ébauche comprenant le support (11) avec le couche décorative (12) formé à travers le support (11) ou agencée sur le support dans un moule inférieur, prévu pour recevoir l'ébauche, d'un outillage de peinture,
- réaliser une première étape de peinture, où le moule inférieur est réuni avec un premier moule supérieur, et ensuite, dans l'outillage de peinture, une première couche de peinture (14 ; 20) du système de peinture (13) est appliquée avec une structure de surface supérieure prédéterminée par la surface de moula du premier moule supérieur,
- réaliser une deuxième étape de peinture, où le moule inférieur est réuni avec un deuxième moule supérieur, et ensuite une deuxième couche de peinture (15 ; 21) du système de peinture (13) est appliquée avec une structure de surface supérieure prédéterminée par la surface de moulage du premier moule supérieur.

2. Procédé selon la revendication 1,
**caractérisé en ce que** la première étape de peinture et/ou la deuxième étape de peinture comprend ou comprennent une coulée et/ou un moulage par injection et/ou un roulage et/ou une impression, notamment une impression en sérigraphie.

3. Procédé selon la revendication 1 ou 2,
**caractérisé en ce que** après avoir exécuté la première étape de peinture, une étape de gaufrage est effectuée, dans lequel le moule inférieur est réuni avec le premier moule supérieur, et pendant la réunion, un gaufrage est transféré sur la première couche de peinture avec une structure de surface supérieure prédéterminée par la surface de moulage du premier moule supérieur.

4. Procédé selon l'une quelconque des revendications 1 à 3, **caractérisé en ce que** au moins une étape de peinture supplémentaire s'ajoute à la deuxième étape de peinture avec au moins un moule supérieur supplémentaire, par l'intermédiaire de laquelle au moins une couche de peinture supplémentaire (22) du système de peinture (13) est coulée avec une structure de surface supérieure prédéterminée par la surface de moulage du moule supérieur supplémentaire.

5. Dispositif de fabrication d'un élément décoratif (10) pour un habitacle de véhicule, comprenant
un support (11) ayant une couche décorative (12) formée à travers le support (11) ou agencée sur le support, qui présente une face avant (16) formées en tant que face visible de l'élément décoratif, et un système de peinture au moins partiellement transparente et/ou translucide (13) sur la face avant (16) de la couche décorative (12), dans lequel le système de peinture (13) présente au moins deux couches de peinture 14, 15 ; 20, 21, 22) superposées, en particulier coulées, formées sur la face avant (16) de la couche décorative (12), dans lequel une face avant (17) opposée à la couche décorative (12) de la couche de peinture la plus extérieure (15 ; 22) présente une surface supérieure sensiblement lisse, dans lequel respectivement deux couches de peinture (14, 15 ; 20, 21, 22) superposées définissent entre elles une interface (18 ; 23, 24), et dans lequel la au moins une interface (18 ; 23, 24), par rapport à la surface supérieure sensiblement lisse de la face avant (17) de la couche de peinture la plus extérieure (15 ; 22), présente une structure au moins partiellement tridimensionnelle, et pour mettre en oeuvre un procédé selon l'une quelconque des revendications 1 à 4, comprenant un outillage de peinture, en particulier un outillage de coulée et/ou de moulage par injection et/ou de roulage et/ou d'impression, avec un moule inférieur et au moins deux moules supérieurs,
dans lequel le moule inférieur est prévu pour recevoir l'ébauche, et les surfaces de moulage des moules supérieurs imposent la structure de surface supérieure des couches de peinture à couler.

6. Dispositif selon la revendication 5,
**caractérisé en ce que** le moule inférieur est monté en rotation, et peut ainsi être tourné par un mouvement de rotation correspondant des au moins deux moules supérieurs pour effectuer les différentes étapes d'application.
